# FASCICULE DE BREVET EUROPEEN

(11) **EP 3 995 192 B1**
(45) Date de publication et mention de la délivrance du brevet: **06.12.2023**
(21) Numéro de dépôt: 21203051.4
(22) Date de dépôt: 17.10.2021
(51) Int. Cl.: A63G 21/22, B61B 12/02, F16B 45/02, A62B 35/00, B61B 7/00

(54) **DISPOSITIF DE CONNEXION À POIGNÉE AMÉLIORÉ**
VERBESSERTE VERBINDUNGSVORRICHTUNG MIT GRIFF
IMPROVED CONNECTION DEVICE WITH HANDLE

(30) Priorité: 09.11.2020 FR 2011498
(43) Date de publication de la demande: 11.05.2022
(73) Titulaire: Zedel, 38920 Crolles (FR)
(72) Inventeur: MAURICE, Alain, 38660 Saint Hilaire du Touvet (FR); VUILLERMOZ, Benoît, 38400 Saint Martin d'Heres (FR); QUILLARD, Christophe, 38320 Eybens (FR)
(74) Mandataire: Talbot, Alexandre

(56) Documents cités:
- WO-A1-2014/123750
- KR-B1- 101 283 056
- US-A1- 2015 059 611
- US-A1- 2018 214 782

## Description

### Domaine technique

L'invention est relative à un dispositif de connexion à poignée.

### Technique antérieure

Dans de nombreuses activités, un utilisateur est fixé à un point d'ancrage, à une ligne de vie ou à tout autre organe d'assurance au moyen d'un élément filaire terminé par un connecteur, typiquement une longe terminée par un mousqueton. Lorsqu'un utilisateur utilise une tyrolienne, le connecteur est fixé à une poulie. Pour éviter que les mains de l'utilisateur viennent se trouver à proximité du câble et des galets, il est proposé une poulie qui possède une poignée. La poignée possède deux extensions qui sont montés fixes sur le corps de la poulie. L'utilisateur s'accroche à la poignée durant la descente. La poignée permet également à l'utilisateur de s'équilibrer pour éviter de tourner lors de la descente.

Dans de nombreuses configurations la poignée n'est pas nécessaire. Il arrive également que la poignée soit source d'incidents car certains individus n'utilisent pas la poignée comme un endroit pour poser leurs mains durant la descente mais comme un point d'accrochage pour réaliser une ou plusieurs tractions ce qui modifie l'interaction de la poulie avec le câble voire entraine un déraillement de la poulie lorsque l'utilisateur lâche violemment la poignée. Il arrive également que l'utilisateur cherche à supporter son poids avec ses bras au lieu de se laisser supporter par sa longe.

Il est donc préférable de prévoir une poulie munie d'une poignée lorsque cela est nécessaire et une poulie dépourvue de poignée dans les autres cas. Cependant, pour un exploitant, il n'est pas intéressant d'avoir deux jeux de poulie, avec et sans poignée, car cela augmente les coûts. Cette problématique n'est pas exclusive aux poulies des tyroliennes et peut être trouvée dans d'autres domaines. Il y a donc un avantage à fournir une poignée amovible. Il ressort que le démontage de la poignée pose une problématique de certification et de maintenance ce qui complique voire rend impossible le démontage de la poignée.

Le document US 2015/0059611 divulgue une poulie munie de deux flasques se faisant face et une poignée. La poignée se présente sous la forme d'une tige qui passe à travers deux trous formés dans les deux flasques. La poulie possède une sellette installée au bout d'une corde fixée à tube installé entre les deux flasques. Le tube recevant la tige de la poignée.

### Objet de l'invention

Un objet de l'invention consiste à prévoir un dispositif de connexion qui possède une poignée amovible, la poignée étant facile à manipuler et ne modifiant pas la répartition des efforts entre l'utilisateur et le point d'ancrage. A cet effet, le dispositif de connexion comporte :
- un connecteur formant un anneau, le connecteur possédant une position ouverte où l'anneau est ouvert et une position fermée où l'anneau est fermé,
- une poignée fixée au connecteur, la poignée possédant deux extensions destinées à recevoir les mains d'un utilisateur ;
- un élément filaire ayant une première extrémité fixée au connecteur et une deuxième extrémité destinée à être fixée à l'utilisateur.

Le dispositif de connexion est remarquable en ce que :
- la première extrémité de l'élément filaire forme une boucle,
- la poignée est montée amovible par rapport au connecteur,
- la poignée définit un tube s'étendant selon une première direction et un trou traversant agencé pour traverser le tube perpendiculairement à la première direction, la première extrémité de l'élément filaire étant fixée au connecteur dans le tube, le connecteur passant à travers le trou traversant et la boucle pour fixer la poignée et l'élément filaire au connecteur.

Dans un développement, le tube est ouvert à une seule extrémité.

Avantageusement, les extensions s'étendent sur une distance inférieure à 5 cm à partir du tube.

Dans un autre développement, la poignée présente possède une résistance à la rupture inférieure à la résistance à la rupture de l'élément filaire selon l'axe longitudinal de l'élément filaire.

Préférentiellement, l'élément filaire est monté mobile par rapport à la poignée.

Dans un mode de réalisation particulier, le connecteur est choisi parmi un mousqueton, une manille et un anneau rapide.

Avantageusement, le dispositif de connexion comporte une poulie destinée à circuler sur un câble, le connecteur étant fixé à la poulie, l'élément filaire étant relié à la poulie uniquement par l'intermédiaire du connecteur.

Dans une configuration préférentielle, le connecteur est monté amovible de la poulie.

Dans un mode de réalisation particulier, le dispositif de connexion comporte une poulie destinée à circuler sur un câble, le connecteur comportant un arbre de rotation démontable, la poignée et l'élément filaire étant montés sur l'arbre de rotation, l'arbre de rotation étant monté amovible.

L'invention a également pour objet un procédé de fabrication d'un dispositif de connexion qui est facile à mettre en oeuvre pour installer une poulie sur un connecteur.

On tend à atteindre ce résultat au moyen d'un procédé de fabrication comportant les étapes suivantes :
-- fournir un connecteur, un élément filaire et une poignée, la poignée définissant un tube s'étendant selon une première direction et un trou traversant agencé pour traverser le tube selon une deuxième direction perpendiculaire à la première direction ;
   - installer l'élément filaire dans le tube, une boucle de l'élément filaire venant en vis-à-vis du trou traversant ;
   - faire passer le connecteur dans le trou traversant et dans la boucle pour fixer l'élément filaire et la poignée avec le connecteur.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 illustre, de manière schématique, une vue de trois-quarts d'un dispositif de connexion possédant une longe et une poignée montées sur un mousqueton ;
- la figure 2 représente de manière schématique, une vue de coupe du dispositif de connexion illustré à la figure 1 ;
- la figure 3 représente de manière schématique, une vue de trois-quarts d'un dispositif de connexion possédant une longe et une poignée montées sur un mousqueton, le mousqueton étant monté dans une poulie ;
- la figure 4 représente de manière schématique, une vue éclatée du dispositif de connexion selon la figure 3, le mousqueton étant monté dans la poulie ;
- la figure 5 représente de manière schématique, représente de manière schématique, une vue de trois-quarts d'une poulie avec connecteur intégré, une longe et une poignée étant montées sur le connecteur ;
- la figure 6 représente de manière schématique, représente de manière schématique une vue éclatée du dispositif de connexion selon la figure 4.

### Description des modes de réalisation

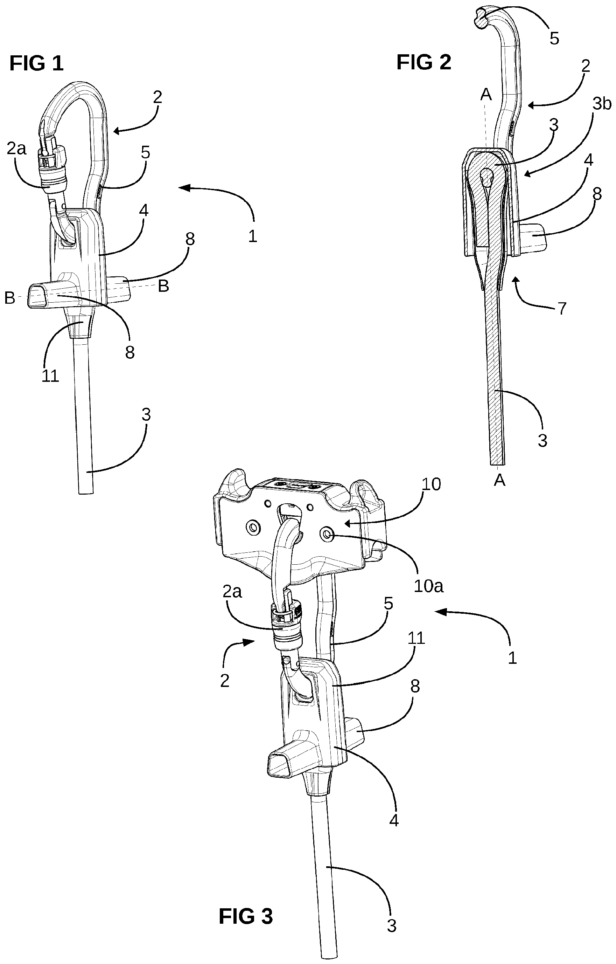

Les figures 1 à 6 illustrent un dispositif de connexion 1 qui comporte un connecteur 2, un élément filaire 3 et une poignée 4. L'élément filaire 3 possède une première extrémité 3a fixée au connecteur 2 et une deuxième extrémité destinée à être fixée à l'utilisateur. De cette manière, le poids de l'utilisateur fixé à l'élément filaire 3 est transmis au connecteur 2. L'élément filaire 3 peut être formé par tout élément adapté, par exemple une longe ou une corde. La première extrémité 3a de l'élément filaire 3 définit une boucle 3b. La boucle 3b est traversée par le connecteur 2 pour assurer la connexion mécanique entre l'utilisateur et le connecteur 2.

Le connecteur 2 forme un anneau. Le connecteur 2 possède une position ouverte où l'anneau est ouvert et une position fermée où l'anneau est fermé. Le connecteur 2 est destiné à être fixé directement ou indirectement à un point d'ancrage. Le point d'ancrage peut être une ligne de vie, le câble d'une tyrolienne. Le connecteur 2 peut être fixé à une poulie elle-même fixée à un câble (non représenté). Le connecteur 2 possède un doigt 2a qui est monté mobile pour fermer ou ouvrir l'anneau.

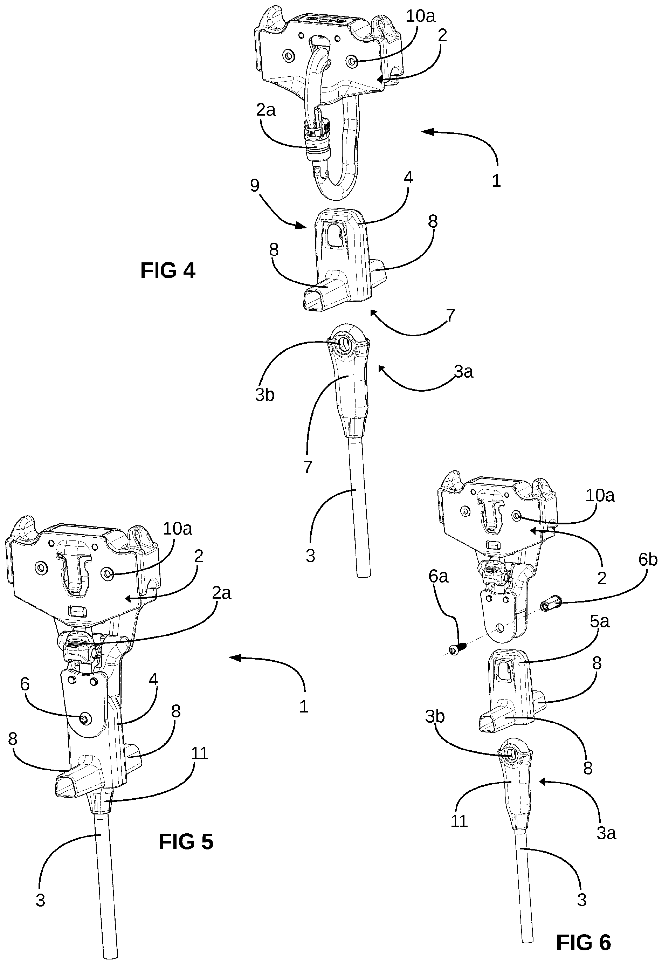

Dans le mode de réalisation illustré aux figures 1 et 2, le connecteur 2 est un mousqueton, mais il est également possible d'utiliser un maillon rapide ou une manille. Dans le mode de réalisation illustré aux figures 1, 2, 3 et 4, le connecteur 2 possède un corps 5 qui forme l'anneau et le corps 5 passe à travers la boucle de l'élément filaire pour réaliser la connexion mécanique. Dans le mode de réalisation illustré aux figures 5 et 6, le connecteur possède un arbre de rotation 6 qui est monté de manière amovible. L'arbre de rotation 6 peut être formé par deux éléments 6a, 6b qui coopère pour fixer l'arbre de rotation 6 sur le connecteur 2.

La poignée 4 définit un tube 7. Le tube 7 est ouvert à une première extrémité. Selon les configurations, le tube 7 est ouvert ou fermé à la seconde extrémité. L'élément filaire 3 est monté à l'intérieur du tube 7. Le tube 7 s'étend selon une première direction AA qui correspond sensiblement à l'axe longitudinal de l'élément filaire 3.

La poignée 4 possède deux extensions 8 qui sont destinées à recevoir les mains de l'utilisateur. Les deux extensions 8 s'étendent selon une deuxième direction BB perpendiculaire à la première direction AA. Selon les configurations, les deux extensions 8 peuvent être creuses ou pleines. Dans le mode de réalisation illustré, les extrémités distales des extensions 8 par rapport au tube 7 sont ouvertes mais il est possible d'avoir des extrémités fermées.

La poignée 4 définit également un trou traversant 9 qui est configuré pour traverser le tube 7 selon une direction perpendiculaire à la première direction AA. Le trou traversant 9 est agencé pour que le connecteur 2 traverse le tube 7 et traverse également la boucle 3b de la première extrémité 3a de l'élément filaire 3.

La première extrémité 3a de l'élément filaire 3 s'introduit dans le tube 7 jusqu'à ce que la boucle 3b se trouve face au trou traversant 9. Le connecteur 2 est alors introduit dans le trou traversant 9 et la boucle 3b pour réaliser deux connexions mécaniques distinctes, une première connexion mécanique entre le connecteur 2 et l'élément filaire 3 et une deuxième connexion mécanique entre le connecteur 2 et la poignée 4.

Lorsque l'utilisateur est suspendu par l'élément filaire 3 fixé au connecteur 2, aucun effort n'est appliqué sur la poignée 4. En d'autres termes, la poignée 4 n'intervient pas dans la suspension de l'utilisateur au moyen du connecteur 2. Cette configuration spécifique permet d'installer et de retirer la poignée 4 sans que cela modifie la répartition des efforts mécaniques entre l'élément filaire 3 et le connecteur 2. Cette configuration permet de faciliter la certification de l'assemblage car la poignée 4 n'intervient pas dans la reprise d'effort. L'installation de la poignée 4 ne nécessite pas une nouvelle phase de certification. Pour l'exploitant, la poignée 4 peut être montée et retirée entre différents connecteurs et/ou différentes poulies ce qui facilite la gestion de son exploitation.

Le trou traversant 9 est représenté par deux trous à travers la paroi latérale du tube 7 et séparés par l'élément filaire 3

Dans le mode de réalisation illustré aux figures 1 à 4, le connecteur 2 possède un corps 5 qui traverse de tube et la boucle en passant par le trou traversant. Dans le mode de réalisation illustré aux figures 5 et 6, l'arbre de rotation passe au travers de la boucle et du trou traversant.

La poignée 4 est montée amovible par rapport au connecteur 2 pour adapter la configuration du connecteur 2 aux besoins de l'exploitant.

Afin de limiter les comportements à risque, il est particulièrement avantageux d'utiliser des extensions 8 qui s'étendent sur une distance inférieure à 5 cm à partir de la paroi latérale qui définit le tube 7. En réduisant la longueur des extensions 8, il est plus difficile pour un utilisateur de tirer sur ses bras pour rapprocher son centre de gravité et le point de fixation entre l'élément filaire 3 et le connecteur 2. L'utilisateur utilise alors les extensions 8 comme un point d'accrochage pour appliquer un couple qui évite la rotation de son buste et non comme un point d'accrochage pour supporter son poids à la place de l'élément filaire 3.

Il est également avantageux de réaliser une poignée 4 qui possède une résistance à la rupture qui est inférieure à la résistance à la rupture de l'élément filaire 3 selon sa direction principale. Il est encore avantageux de réaliser une poignée qui possède une résistance à la rupture qui est inférieure à la résistance à la rupture du connecteur 2.

Dans les différents modes de réalisation illustrés, l'axe de rotation de la poignée 4 par rapport au connecteur 2 est parallèle à l'axe longitudinal des extensions 8 à partir du tube 7. Cependant, un décalage des deux axes est possible voire même un montage perpendiculaire des deux axes.

Dans le mode de réalisation préférentiel illustré, le point de fixation entre l'élément filaire 3 et le connecteur 4 se trouve sous les poignées lorsque l'utilisateur est suspendu avec l'élément filaire.

La poignée 4 est avantageusement réalisée de manière monolithique et préférentiellement dans un matériau plastique.

Les figures 1 et 2 illustrent une configuration où le dispositif de connexion 1 est formé par un connecteur 2 qui est un mousqueton, une poignée fixée au mousqueton et un élément filaire 3 fixé au mousqueton à l'intérieur du tube 7 défini par la poignée 4. Dans cette configuration, le connecteur 2 peut être fixé à un point d'ancrage sans avoir à manipuler la poignée 4 et l'élément filaire 3. Pour extraire la poignée 4, il est nécessaire d'ouvrir le connecteur 2 puis d'enlever la poignée 4 et l'élément filaire 3. L'élément filaire 3 peut être ré-installé par la suite. Le connecteur 2 peut être monté sur une poulie comme cela est représenté à la figure 3. La figure 4 illustre une vue où la poignée et l'élément filaire 3 ont été séparés du connecteur 2.

Dans une autre mode de réalisation, le connecteur 2 est fixé à une poulie 10. Le trou traversant 9 et la boucle 3b peuvent être installés sur le connecteur 2 sans séparer le connecteur 2 et la poulie 10.

Dans le mode de réalisation illustré aux figures 5 et 6, le connecteur 2 est réalisé de manière monolithique avec la poulie 10. Le corps 5 du connecteur 2 définissant l'anneau ouvert ou fermé ayant une forme spécifique et plus complexe que celui de la figure 4, il est avantageux d'installer un arbre de rotation 6 démontable sur le connecteur 2.

Dans les modes de réalisation illustrés aux figures 3 à 6, les poulies 10 sont des poulies tandems, c'est-à-dire des poulies avec deux galets montés en ligne selon l'axe longitudinal du câble sur lequel la poulie 10 doit rouler. Chaque galet est monté sur un arbre de rotation 10a.

La configuration spécifique de la poignée 4 est particulièrement avantageuse car elle permet de fonctionnaliser un connecteur 2 qui est déjà en utilisation chez un exploitant avoir à changer la poulie 10 et éventuellement sans avoir à modifier le connecteur 2.

Dans les configurations illustrées, le tube 7 définit un anneau autour de l'élément filaire 2 selon un plan perpendiculaire à la direction AA. Il est préférable que la section du tube selon le plan perpendiculaire à la direction AA est différente d'un cercle, de préférence de section rectangulaire éventuellement à bord arrondi.

Dans les modes de réalisation illustrés, la boucle 3b est formée par une pliure. La boucle est formée par deux branches de l'élément filaire 3. Préférentiellement, la boucle est définie par une couture entre les deux branches. Il est préférable que la boucle soit recouverte par une protection 11 qui définit la forme de la boucle pour faciliter son insertion dans le tube 7.

## Revendications

1. Dispositif de connexion (1) comprenant :
- un connecteur (2) formant un anneau, le connecteur (2) possédant une position ouverte où l'anneau est ouvert et une position fermée où l'anneau est fermé,
- une poignée (4) fixée au connecteur (2), la poignée (2) possédant deux extensions (8) destinées à recevoir les mains d'un utilisateur ;
- un élément filaire (3) ayant une première extrémité (3a) fixée au connecteur (2) et une deuxième extrémité destinée à être fixée à l'utilisateur, la première extrémité (3a) de l'élément filaire (3) formant une boucle (3b) ;
dans lequel la poignée (4) est montée amovible par rapport au connecteur (2), **caractérisé en ce que** la poignée (4) définit un tube (7) s'étendant selon une première direction (AA) et un trou traversant (9) agencé pour traverser le tube (7) perpendiculairement à la première direction (AA), la première extrémité (3a) de l'élément filaire (3) étant fixée au connecteur (2) dans le tube (7), le connecteur (2) passant à travers le trou traversant (9) et la boucle (3b) pour fixer la poignée (4) et l'élément filaire (3) au connecteur (2).

2. Dispositif de connexion (1) selon la revendication 1, dans lequel le tube (7) est ouvert à une seule extrémité.

3. Dispositif de connexion (1) selon l'une des revendications 1 et 2, dans lequel les extensions (8) s'étendent sur une distance inférieure à 5 cm à partir du tube (7).

4. Dispositif de connexion (1) selon l'une quelconque des revendications 1 à 3, dans lequel la poignée (4) présente une résistance à la rupture inférieure à la résistance à la rupture de l'élément filaire (3) selon l'axe longitudinal de l'élément filaire (3).

5. Dispositif de connexion (1) selon l'une quelconque des revendications 1 à 4, dans lequel l'élément filaire (3) est monté mobile par rapport à la poignée (4).

6. Dispositif de connexion (1) selon l'une quelconque des revendications 1 à 5, dans lequel le connecteur (2) est choisi parmi un mousqueton, une manille et un anneau rapide.

7. Dispositif de connexion (1) selon l'une quelconque des revendications 1 à 6, comportant une poulie (10) destinée à circuler sur un câble, le connecteur (2) étant fixé à la poulie (10), l'élément filaire (3) étant relié à la poulie (10) uniquement par l'intermédiaire du connecteur (2).

8. Dispositif de connexion (1) selon la revendication 7, dans lequel le connecteur (2) est monté amovible de la poulie (10).

9. Dispositif de connexion (1) selon l'une quelconque des revendications 1 à 4, comportant une poulie (10) destinée à circuler sur un câble, le connecteur (2) comportant un arbre de rotation (6) démontable, la poignée (4) et l'élément filaire (3) étant montés sur l'arbre de rotation (6), l'arbre de rotation (6) étant monté amovible.

10. Procédé de fabrication d'un dispositif de connexion selon l'une des revendications précédentes comportant les étapes suivantes ;
- fournir un connecteur (2), un élément filaire (3) et une poignée (4), la poignée définissant un tube (7) s'étendant selon une première direction (AA) et un trou traversant (9) agencé pour traverser le tube (7) selon une deuxième direction perpendiculaire à la première direction (AA) ;
- installer l'élément filaire (3) dans le tube (7), une boucle (3b) de l'élément filaire (3) venant en vis-à-vis du trou traversant (9) ;
- faire passer le connecteur (2) dans le trou traversant (9) et dans la boucle (3b) pour fixer l'élément filaire (3) et la poignée (4) avec le connecteur (2).

## Patentansprüche

1. Verbindungsvorrichtung (1), umfassend:
- einen Verbinder (2), der einen Ring bildet, wobei der Verbinder (2) eine offene Position aufweist, in welcher der Ring offen ist, und eine geschlossene Position, in welcher der Ring geschlossen ist,
- einen Griff (4), der am Verbinder (2) befestigt ist, wobei der Griff (2) zwei Erweiterungen (8) aufweist, die dazu bestimmt sind, die Hände eines Benutzers aufzunehmen;
- ein kabelförmiges Element (3) mit einem ersten Ende (3a), das am Verbinder (2) befestigt ist, und einem zweiten Ende, das dazu bestimmt ist, am Benutzer befestigt zu werden, wobei das erste Ende (3a) des kabelförmigen Elements (3) eine Schlaufe (3b) bildet;
wobei der Griff (4) in Bezug auf den Verbinder (2) abnehmbar montiert ist, **dadurch gekennzeichnet, dass** der Griff (4) ein Rohr (7) definiert, das sich in einer ersten Richtung (AA) erstreckt, und ein Durchgangsloch (9), das derart angeordnet ist, dass es das Rohr (7) senkrecht zur ersten Richtung (AA) durchquert, wobei das erste Ende (3a) des kabelförmigen Elements (3) im Rohr (7) am Verbinder (2) befestigt ist, wobei der Verbinder (2) durch das Durchgangsloch (9) und die Schlaufe (3b) hindurchgeht, um den Griff (4) und das kabelförmige Element (3) am Verbinder (2) zu befestigen.

2. Verbindungsvorrichtung (1) nach Anspruch 1, wobei das Rohr (7) nur an einem Ende offen ist.

3. Verbindungsvorrichtung (1) nach einem der Ansprüche 1 und 2, wobei sich die Erweiterungen (8) vom Rohr (7) aus über eine Entfernung kleiner als 5 cm erstrecken.

4. Verbindungsvorrichtung (1) nach einem der Ansprüche 1 bis 3, wobei der Griff (4) eine Bruchfestigkeit aufweist, die kleiner ist als die Bruchfestigkeit des kabelförmigen Elements (3) entlang der Längsachse des kabelförmigen Elements (3).

5. Verbindungsvorrichtung (1) nach einem der Ansprüche 1 bis 4, wobei das kabelförmige Element (3) relativ zum Griff (4) beweglich montiert ist.

6. Verbindungsvorrichtung (1) nach einem der Ansprüche 1 bis 5, wobei der Verbinder (2) aus einem Karabinerhaken, einem Schäkel und einem Schnellverschlussring gewählt ist.

7. Verbindungsvorrichtung (1) nach einem der Ansprüche 1 bis 6, umfassend eine Seilrolle (10), die dazu bestimmt ist, auf einem Seil zu laufen, wobei der Verbinder (2) an der Seilrolle (10) befestigt ist und das kabelförmige Element (3) nur über den Verbinder (2) mit der Seilrolle (10) verbunden ist.

8. Verbindungsvorrichtung (1) nach Anspruch 7, wobei der Verbinder (2) von der Seilrolle (10) abnehmbar montiert ist.

9. Verbindungsvorrichtung (1) nach einem der Ansprüche 1 bis 4, umfassend eine Seilrolle (10), die dazu bestimmt ist, auf einem Seil zu laufen, wobei der Verbinder (2) eine lösbare Drehwelle (6) aufweist, wobei der Griff (4) und das kabelförmige Element (3) an der Drehwelle (6) montiert sind, wobei die Drehwelle (6) abnehmbar montiert ist.

10. Verfahren zur Herstellung einer Verbindungsvorrichtung nach einem der vorherigen Ansprüche, umfassend die folgenden Schritte:
- Bereitstellen eines Verbinders (2), eines kabelförmigen Elements (3) und eines Griffs (4), wobei der Griff ein Rohr (7) definiert, das sich in einer ersten Richtung (AA) erstreckt, und ein Durchgangsloch (9), das derart angeordnet ist, dass es das Rohr (7) in einer zweiten Richtung senkrecht zu der ersten Richtung (AA) durchquert;
- Installieren des kabelförmigen Elements (3) im Rohr (7), wobei eine Schlaufe (3b) des kabelförmigen Elements (3) dem Durchgangsloch (9) gegenüberliegend angeordnet wird;
- Führen des Verbinders (2) durch das Durchgangsloch (9) und durch die Schlaufe (3b), um das kabelförmige Element (3) und den Griff (4) mit dem Verbinder (2) zu befestigen.

## Claims

1. Connection device (1) comprising:
- a connector (2) forming a ring, the connector (2) having an open position where the ring is open and a closed position where the ring is closed,
- a handle (4) fixed to the connector (2), the handle (2) having two extensions (8) designed to receive a user's hands;
- a wire member (3) having a first end (3a) fixed to the connector (2) and a second end designed to be secured to the user, the first end (3a) of the wire member (3) forming a loop (3b);
wherein the handle (4) is fitted removable with respect to the connector (2), **characterised in that** the handle (4) defines a tube (7) extending in a first direction (AA) and a through hole (9) arranged to pass through the tube (7) perpendicularly to the first direction (AA), the first end (3a) of the wire member (3) being fixed to the connector (2) in the tube (7), the connector (2) passing through the through hole (9) and the loop (3b) to fix the handle (4) and the wire member (3) to the connector (2).

2. Connection device (1) according to claim 1, wherein the tube (7) is open at one end only.

3. Connection device (1) according to one of claims 1 and 2, wherein the extensions (8) extend over a distance of less than 5 cm from the tube (7).

4. Connection device (1) according to any one of claims 1 to 3, wherein the handle (4) has a lower breaking strength than the breaking strength of the wire member (3) along the longitudinal axis of the wire member (3).

5. Connection device (1) according to any one of claims 1 to 4, wherein the wire member (3) is fitted removable with respect to the handle (4).

6. Connection device (1) according to any one of claims 1 to 5, wherein the connector (2) is chosen from a carabiner, a shackle and a quick link.

7. Connection device (1) according to any one of claims 1 to 6, comprising a pulley (10) designed to run on a cable, the connector (2) being fixed to the pulley (10), the wire member (3) being connected to the pulley (10) by means of the connector (2) only.

8. Connection device (1) according to claim 7, wherein the connector (2) is fitted removable from the pulley (10).

9. Connection device (1) according to any one of claims 1 to 4, comprising a pulley (10) designed to run on a cable, the connector (2) comprising a removable rotation shaft (6), the handle (4) and wire member (3) being fitted on the rotation shaft (6), the rotation shaft (6) being fitted in removable manner.

10. Method for fabricating a connection device according to one of the foregoing claims comprising the following steps:
- providing a connector (2), a wire member (3) and a handle (4), the handle defining a tube (7) extending in a first direction (AA) and a through hole (9) arranged to pass through the tube (7) in a second direction perpendicular to the first direction (AA);
- installing the wire member (3) in the tube (7), a loop (3b) of the wire member (3) being facing the through hole (9);
- passing the connector (2) through the through hole (9) and the loop (3b) to fix the wire member (3) and the handle (4) with the connector (2).
